# EUROPEAN PATENT SPECIFICATION

(11) **EP 3 331 724 B1**
(45) Date of publication and mention of the grant of the patent: **18.11.2026**
(21) Application number: 16709232.9
(22) Date of filing: 29.02.2016
(51) Int. Cl.: B60N 2/56, B60N 2/75

(54) **THERMALLY CONTROLLED SURFACES**
WÄRMEGESTEUERTE FLÄCHEN
SURFACES COMMANDÉES THERMIQUEMENT

(30) Priority: 07.08.2015 US 201562202545 P
(43) Date of publication of application: 13.06.2018
(73) Proprietor: Safran Cabin Inc., Huntington Beach, CA 92647 (US)
(72) Inventor: LA MONTAGNA, Christopher J., Santa Maria, California 93455 (US); NOSKE, Mark Erhardt, Santa Maria, California 93455 (US)
(74) Representative: Gevers & Orès
(86) International application number: PCT/US2016/020113
(87) International publication number: WO 2017/027067

(56) References cited:
- EP-A1- 2 233 046
- US-A1- 2006 175 877

## Description

### FIELD OF THE INVENTION

The field of the invention relates to climate control in aerospace environments.

### BACKGROUND

Aerospace solutions for thermal comfort can include cabin-wide climate control (e.g., heating and cooling). Typical commercial airlines carry large groups of passengers. It is understandable that each passenger will have her own preference as it relates to thermal comfort. Reliance on cabin-wide climate control will invariably leave some passengers uncomfortable and dissatisfied with chosen temperature levels.

As an attempt to address this dissatisfaction, most commercial airlines include some degree of personalized climate control. For example, personalized climate control can be provided as overhead or in-seat system gaspers which achieve some level of cooling and/or in-seat heating systems using resistive heating elements. While these options may be sufficient to achieve thermal comfort for some passengers, other passengers will remain uncomfortable and dissatisfied. This may be because gaspers are inefficient at providing cooling, and resistive heating elements are limited to heating only. Use of air conditioners to provide cooling may be undesirable in aerospace environments because of their required bulk, power requirements, and byproduct heat generated. EP2233046 (Panasonic Corp) teaches an armrest portion of a passenger seat according to the precharacterisig part of claim 1, with a heating element provided in a topside of the armrest portion. US2006/175877 (Alionte Corina et al) teaches a ventilation system and a temperature regulation system comprising an air-moving device operably coupled to an access hole on the reverse side of a ventilation layer, such that the air-moving device moves conditioned air into the ventilation layer and out through a plurality of output holes; and a control module comprising controls for controlling operation of the temperature regulation system, wherein the seat surface is maintained at a temperature. Heat is provided by a positive thermal coefficient (PTC) based heater with or without a thermoelectric device in the path of air flow leading to the ventilation layer. The thermoelectric device comprises a thermoelectric module such as a Peltier device plus a heat sink

### SUMMARY

An armrest is provided according to claim 1.

A passenger seat assembly is provided according to claim 10.

A passenger seat is provided according to claim 13.

Further embodiments are defined by the dependent claims.

### BRIEF DESCRIPTION OF THE DRAWINGS

Figure 1 is a front perspective view of a seat assembly including a plurality of thermal zones, according to certain examples.
Figure 2A is a perspective view of a seat shell including a plurality of thermal zones, according to certain examples.
Figure 2B is a perspective view of an armrest of the seat shell from Figure 2A including a thermoelectric system.
Figure 3 is an exploded view of a portion of the armrest and the thermoelectric system from Figure 2B.
Figure 4 is a rear perspective view of the seat assembly of Figure 1.
Figure 5 is a perspective view of a seat assembly including a plurality of thermal zones, according to certain examples.
Figure 6 is a top view of the seat assembly of Figure 5 with seats in deployed positions.
Figure 7 is a profile view of the seat assembly of Figure 5 illustrating footwells.
Figure 8 is an example block diagram of a thermoelectric device, according to certain examples.

### DETAILED DESCRIPTION

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. The subject matter of embodiments of the present description is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The described embodiments of the description provide thermoelectric devices for inclusion in passenger seats and seat shells. While the thermoelectric devices are discussed for use with aircraft seats, they are by no means so limited. Rather, embodiments of the thermoelectric devices may be used in passenger seats or other seats of any type or otherwise as desired, and may also be used in other parts of an aircraft surrounding the passenger seats and the seat shells (e.g., bulkhead, sidewalls, storage cabinets, etc.).

Embodiments described herein can include passenger seats and surrounding furniture (e.g., seat shells) that can include thermoelectric devices. The thermoelectric devices can be configured to provide thermoelectric heating and thermoelectric cooling depending on the electrical current being applied to the thermoelectric devices and/or the orientation of the thermoelectric devices. The thermoelectric devices can be mounted in the passenger seats and surrounding furniture in a manner that allows efficient heat transfer between (i.e., to and from) occupants of the passenger seats and surfaces of the passenger seats and/or surrounding furniture including the thermoelectric devices using the principles of conduction and radiation. Thus, unlike typical heating and cooling implementations that may rely on convection (e.g., air gaspers), the arrangements of thermoelectric devices described herein can provide for improved temperature control for occupants. In some examples, multiple thermoelectric devices can be disposed in various regions of the passenger seats and seat shells to define various thermal zones of a thermoelectric system. Using a management device, the various thermal zones can be independently cooled and warmed by adjusting the voltage being applied to the various thermoelectric devices included within each of the various thermal zones. In some examples, a user interface may be provided. The user interface can enable a user to control certain aspects of the thermoelectric system by communicating with the management device.

Use of the thermoelectric devices described herein may positively affect overall perceived comfort of a passenger. For example, mere forearm contact with a thermally-controlled armrest (e.g., an armrest of the passenger seat that includes a thermoelectric device) may cause the passenger to regulate her temperature quicker than without the thermally-controlled armrest and in a manner that takes advantage of the passenger's internal thermal regulatory system. Use of a user interface and a management device in conjunction with the thermally-controlled armrest, may enable the passenger to control aspects of the thermally-controlled armrest (e.g., change a "heat" setting, change a "cool" setting, set a timer, and the like) to her liking.

When included in an aircraft cabin, the thermoelectric devices may provide less residual heat, have fewer mechanical parts, and have lower power requirements as compared to other heating and cooling methods such as air conditioning units, air gaspers, resistive heaters, and the like. This is because the thermoelectric devices can provide heating and cooling by utilizing principles of the Peltier effect. Using these principles, when a first current having a first polarity is applied to a junction disposed between two opposing conductors of a thermoelectric device, heat may be generated at the junction. Likewise, when s second current having a second, opposite polarity is applied to the junction, heat may be removed from the junction.

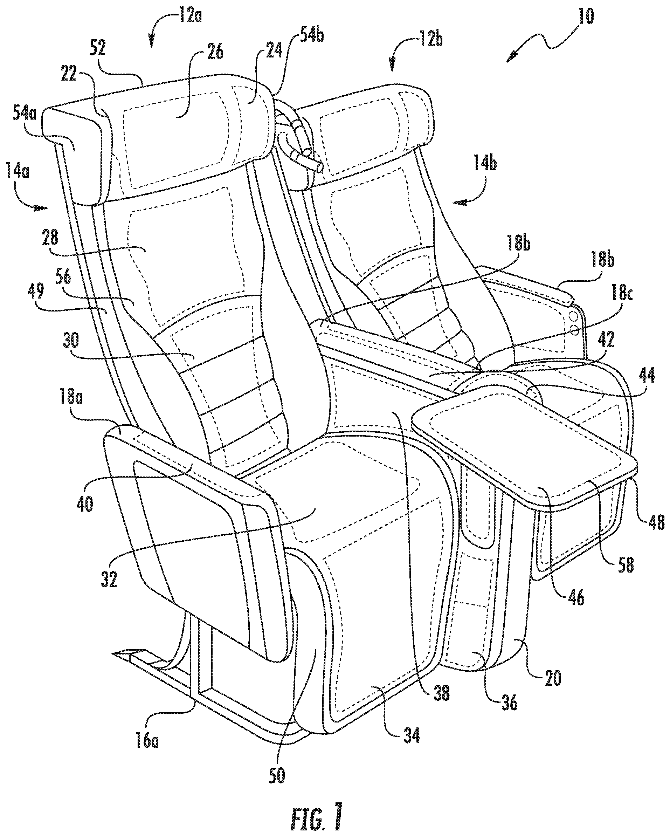

Turning now to the figures, Figure 1 illustrates a seat row assembly 10 that includes a set of seat assemblies 12a, 12b that can include thermoelectric devices as described herein, according to at least some examples. Each seat assembly 12 can include a seat 14 supported by a frame 16, one or more armrests 18 supported by the frame 16, and a seat shell 20 that surrounds a portion of the seat 14. In some examples, the seat shell 20 may be excluded from the seat assembly 12. For example, in passenger seat implementations used in higher density seating arrangements.

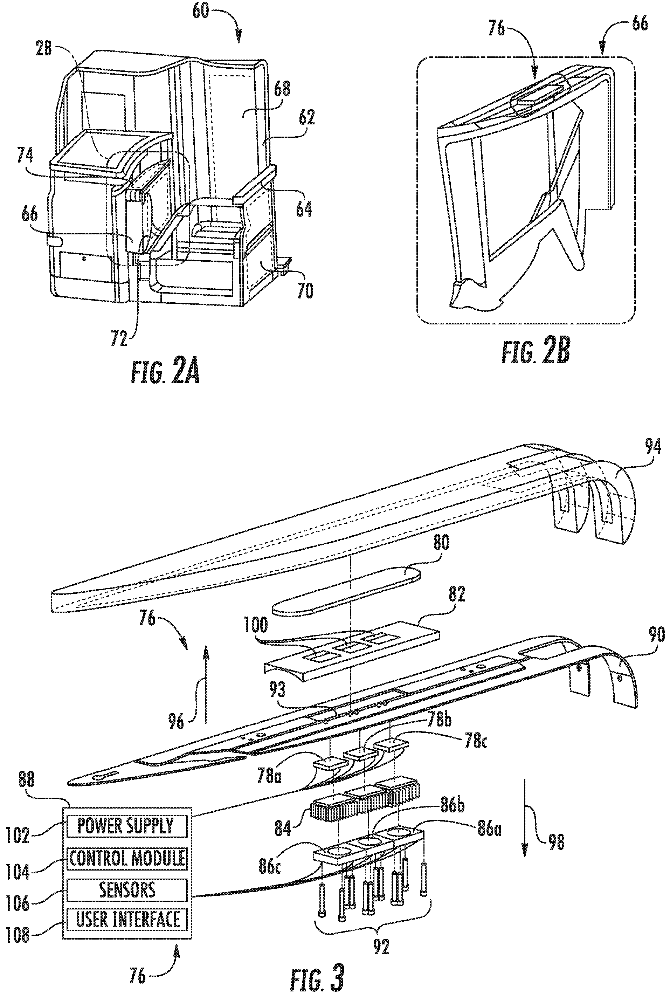

Further discussion of the seat row assembly 10 will focus on the seat assembly 12a (or the seat assembly 12), however, it is understood that seat assembly 12b may also include similar features. The seat assembly 12a can be defined to include one or more thermal surfaces 22-48. Depending on the example being implemented, it is understood that greater or fewer thermal surfaces than those shown may be provided. Within each of the thermal surfaces 22-48 can be included a thermoelectric device configured as described herein (e.g., as discussed with reference to Figure 3).

The seat 14 can be any suitable passenger seat formed from any suitable material or combination of suitable materials, which may be mounted to the frame 16. For example, the frame 16 may be formed from a rigid material such as aluminum and components of the seat 14 may be attached to the frame 16. Such components of the seat 14 can include a seatback frame, an interior seatback shell, a seat pane, the armrests 18, and the like. In some examples, high-density foam is attached to the components and/or held to the components by an exterior material (e.g., leather or fabric) that is wrapped around the seat 14. In some examples, different combinations of foam and exterior material can be selected to enhance or otherwise tune the conduction and radiation of thermal energy between a passenger and the thermoelectric devices described herein.

As the seat 14 may be a passenger seat, it can include a seatback 49 and a seat bottom 50. The seatback 49 and the seat bottom 50 may be pivotably mounted to the frame 16 to enable the seat 14 to recline between an upright orientation (e.g., seat assembly 12A) and a reclined orientation. In some examples, in the reclined orientation, the seat 14 may have a substantially flat orientation running from an upper part of the seatback 49 to a lower part of the seat bottom 50.

The seatback 49 can include a headrest portion 52, including adjustable winglets 54a, 54b, and a torso support portion 56 that extends between the headrest portion 52 and the seat bottom 50. The adjustable winglets 54a, 54b may be configured to pivot inwards and outwards to support the head and/or neck of the passenger. The headrest portion 52 can include the thermal surface 26 and the thermal surfaces 22 and 24 in the adjustable winglets 54a, 54b. In some examples, the thermal surfaces 22-26 of the headrest portion 52 may together define a thermal zone (e.g., a head thermal zone) that may be independently controllable as compared to the other thermal surfaces 28-48, which may be included in other thermal zones. The torso support portion 56 can include the thermal surfaces 28, 30. In some examples, the thermal surfaces 28, 30 of the torso support portion 56 may together define a thermal zone (e.g., a torso thermal zone) that may be independently controllable as compared to other thermal surfaces 22-26 and 32-48, which may be included in other thermal zones. In some examples, the thermal surfaces 22-30 may together define a thermal zone (e.g., a seatback zone), which may function similarly as other thermal zones described herein.

The seat bottom 50 can include the thermal surfaces 32, 34. In some examples, the thermal surfaces 32, 34 of the seat bottom 50 may together define a thermal zone (e.g., a leg thermal zone) that may be independently controllable as compared to the other thermal surfaces 22-30 and 36-48, which may be included in other thermal zones. In some examples, each of the thermal surfaces 32, 34 may be included in its own thermal zone so as to define an upper leg thermal zone and a lower leg thermal zone.

The seat shell 20 can include the thermal surfaces 36, 38. The seat shell 20 may also include one or more other thermal surfaces located in a vertical portion of the armrest 18a (e.g., opposite the thermal surface 38). In some examples, the thermal surfaces 36, 38 of the seat shell 20 may together define a thermal zone (e.g., an exterior leg zone) that may be independently controllable as compared to the other thermal surfaces 22-34 and 40-48, which may be included in other thermal zones. In some examples, the thermal surfaces 36, 38 may be included together with the leg thermal zone, or may be split to correspond to the upper leg thermal zone and the lower leg thermal zone. In some examples, the thermal surfaces 36, 38 may together form a left leg thermal zone, and opposite thermal surfaces located in the vertical portion of the armrest 18a may together form a right leg thermal zone. The seat shell 20 can also include the thermal surface 44. The thermal surface 44 may be a flat surface, one or more cup holders, or a flat surface that may convert to one or more cup holders. The thermal surface 44 may include thermoelectric devices to transfer thermal energy between objects resting on the thermal surface 44 (e.g., dinner plate, coffee, water, etc.).

The armrests 18 can include the thermal surfaces 40, 42. In some examples, the thermal surfaces 40, 42 of the armrests may together define a thermal zone (e.g., an arm thermal zone) that may be independently controllable as compared to the other thermal surfaces 22-38 and 44-48, which may be included in other thermal zones. In some examples, each of the thermal surfaces 40, 42 may be included in its own thermal zone so as to define a left arm thermal zone and a right arm thermal zone.

The seat 14 may also include a tray table 58. The tray table 58 may be pivotably and/or slidably attached to the seat 14 (e.g., at the seat shell 20). In this manner, the tray table 58 be configured to move from a retained position to a deployed position. In Figure 1, the tray table is illustrated in an intermediate position between the retained and deployed positions. The tray table 58 may be defined by a top surface and a bottom surface. The thermal surface 46 may be located on the top surface of the tray table 58. The thermal surface 48 may be located on the bottom surface of the tray table 58. In some examples, the thermal surfaces 46, 48 of the tray table 58 may together define a thermal zone (e.g., a tray table thermal zone) that may be independently controllable as compared to the other thermal surfaces 22-44, which may be included in other thermal zones. In some examples, each of the thermal surfaces 46, 48 may be included in its own thermal zone so as to define a tray top thermal zone and a tray bottom thermal zone. In some examples, the tray bottom thermal zone may be combined with any of the leg thermal zones such that when the tray table 58 is deployed and disposed above a passenger's legs, the thermal surface 48 may provide heating or cooling to the topsides of the passenger's legs.

As described herein, any suitable combination of the thermal surfaces 22-48 may be combined to define any suitable number of thermal zones that each include any suitable number of thermoelectric devices oriented in any suitable manner (e.g., alternating orientations). In some examples, a management device may manage independent operations and dependent operations of the thermal zones (or individual thermal surfaces 22-48) by adjusting the voltage being applied to the various thermoelectric devices included within each of thermal surfaces 22-48 that define the thermal zones. In some examples, the management device may receive instructions to manage the thermoelectric devices in response to input at a user interface. The input may be user input provided by a passenger seated in the seat 14.

Figures 2A-2B illustrate a seat assembly 60 that includes a seat shell 62 and two armrest structures 64, 66 that can include thermoelectric devices as described herein, according to at least some examples. The seat assembly 60 is a type of a business class (or other low density seating arrangement) seat assembly. The seat assembly 60 may include an internal frame to which the seat shell 62 may be attached. In some examples, the seat shell 62 can be a unibody structure.

The seat shell 62 may be formed from any suitable materials including but not limited to aluminum, stainless steel, aramid fibers, polycarbonate, polypropylene, other metallic materials, composite materials, or other similar materials. The seat shell 62 may be configured to receive a passenger seat between the armrest structures 64, 66. When the passenger seat is mounted to the seat shell 62 and/or the frame of the seat assembly 60, the seat shell 62 may extend around at least a portion of the passenger seat. In this manner, the seat shell 62 may function as a privacy wall between a passenger sitting in the passenger seat and other passengers. The seat shell 62 may include a thermal surface 68 corresponding to a vertical surface, at least a portion of which may be located behind the passenger seat when the passenger seat is included in the seat assembly 60. The thermal surface 68 may include similar characteristics as the thermal surfaces 22-48 described herein. The vertical surface to which the thermal surface 68 corresponds may function as a vertical privacy surface as well.

The armrest structures 64, 66 can be configured to provide armrest support for a passenger sitting in the passenger seat of the seat assembly 60. In some examples, the armrest structure 64 can be defined as having a passenger-facing vertical surface and an exterior vertical surface, each of which may include a thermal surface (e.g., thermal surface 70). In some examples, the armrest structure 66 may be defined as having a passenger-facing vertical surface which may include a thermal surface 72 and a horizontal surface which may include a thermal surface 74.

Any of the thermal surfaces 68-74 (and others of the seat assembly 60) can include one or more thermoelectric devices included in one or more thermoelectric systems. For example, a thermoelectric system 76 may be attached to the armrest structure 66 as illustrated in the cut-away view of the armrest structure 66 in Figure 2B. Figure 3 illustrates an exploded view of the thermoelectric system 76 in connection with components of the armrest structure 66. The thermoelectric system 76 may include a set of thermoelectric devices 78a-78c, a contact heat sink 80, insulating spacer 82, waste heat sink 84, a set of fans 86a-86c, and a management device 88 in communication with at least the set of thermoelectric devices 78 and the set of fans 86.

The components of the thermoelectric system 76 can be attached to the armrest structure 66 via an armrest support structure 90 of the armrest structure 66. The armrest support structure 90 may be a suitably rigid part of the armrest structure 66 capable of retaining the thermoelectric system 76. The thermoelectric system 76 may be attached to the armrest support structure 90 in any suitable manner. For example, such mounting may take place using mounting hardware 92. The armrest support structure 90 may include one or more openings 93 to receive at least part of the thermoelectric system 76. For example, the thermoelectric devices 78 may extend through the one or more openings 93. In some examples, the one or more openings 93 may be one or more recessed portions of the armrest support structure 90. The mounting hardware 92 may function to sandwich the armrest support structure 90 between the contact heat sink 80 and the fans 86. For example, the mounting hardware 92 may be bolts that extend through at least some components of the thermoelectric system 76 and thread into the contact heat sink 80.

The thermoelectric system 76 may be disposed below an arm cushion 94 of the armrest structure 66. In some examples, the arm cushion 94 may be formed from a high density foam or other comparable material. Above the arm cushion 94 may be a layer of fabric and/or leather. The thermoelectric system 76 may be configured to transfer thermal energy through the arm cushion 94 and the layer of fabric and/or leather such that temperature differences may be detected by a passenger sitting in the seat assembly 60. In some examples, the thermoelectric system 76 may be designed to account for thermal resistance values attributable to the arm cushion 94, the layer of fabric and/or leather, and any other items that may be disposed between the thermoelectric system 76 and a passenger and/or open air (e.g., in a radiative embodiment).

Turning now to the set of thermoelectric devices 78a-78c (the thermoelectric device 78) in more detail, the thermoelectric device 78 may be electrically connected to the management device 88 by a first lead and a second lead. The management device 88 may be configured to provide current having different polarities to the thermoelectric device 78. In some examples, the thermoelectric device 78 may be designed to function in accordance with the Peltier effect. In this manner, application of a first current may cause a top surface (e.g., the surface disposed on a top side of the thermoelectric device 78) of the thermoelectric device 78 to collect heat while a bottom surface (e.g., the surface disposed on a bottom side of the thermoelectric device 78) of the thermoelectric device 78 to loose heat. This may cause heat to flow in the direction of arrow 96. When the current is reversed (e.g., when a second current having an opposite polarity is applied), the top surface may lose heat as the bottom surface collects heat. This may cause heat to flow in the direction of arrow 98.

In some examples, the thermoelectric devices 78 may arranged such that some thermoelectric devices 78, when a current having a first polarity is applied, cause heat to flow in the direction of arrow 96, while other thermoelectric devices 78, when the same current is applied, cause heat to flow in the direction of the arrow 98. For example, the thermoelectric devices 78a, 78c may be oriented as shown. And the thermoelectric device 78b may be oriented in an alternate orientation that puts the bottom surface of the thermoelectric device 78b up. Thus, although the thermoelectric devices 78 themselves may be configured to alternate which surfaces get hot or cold by switching current, in this example, the thermoelectric devices 78 may be orientated to have more or less dedicated hot surfaces and dedicated cold surfaces. For example, in order to heat the contact heat sink 80 (e.g., in response to user input for heating), the management device 88 may apply a current to only those thermoelectric devices 78 that are configured to heat to the contact heat sink 80 (e.g., the thermoelectric devices 78a, 78c). In order to cool the contact heat sink 80 (e.g., in response to user input for cooling), the management device 88 may apply a current (e.g., a current with the same polarity as above) to only those thermoelectric devices 78 that are configured to cool the contact heat sink 80 (e.g., the thermoelectric device 78b). In this manner, the orientations of the thermoelectric devices 78 may be configured in an alternating manner in order to provide alternating heating and cooling.

Thermal energy may be transferred from the thermoelectric device 78 by way of the contact heat sink 80 and the waste heat sink 84. The contact heat sink 80 and the waste heat sink 84 are examples of conductive plates and/or conductive components that can be used to conduct and/or distribute thermal energy generated at the thermoelectric device 78.

The contact heat sink 80 may be disposed between the thermoelectric device 78 and the arm cushion 94. In some examples, a surface of the contact heat sink 80 (e.g., a bottom side) may be in contact with a surface of the thermoelectric device 78 (e.g., a top side). In some examples, a thermal interface material (e.g., a thermal paste, a thermal pad, a thermal tape, and the like) may be disposed between the bottom side of the contact heat sink 80 and the top side of the thermoelectric device 78. The contact heat sink 80 may be configured to transfer thermal energy over a prescribed area within and around the arm cushion 94 that corresponds to the shape of the contact heat sink 80. For example, the contact heat sink 80 can be a thin plate of conductive material disposed in the armrest structure 66 at a position where a passenger's forearm will rest (e.g., on the arm cushion 94). In this manner, the contact heat sink 80 can be configured to conduct heat to the forearm or from the forearm, depending on the operation of the thermoelectric device 78.

The waste heat sink 84 may be disposed below the thermoelectric device 78 (e.g., on the opposite side as the contact heat sink 80). In some examples, a surface of the waste heat sink 84 (e.g., a top side) may be in contact with a surface of the thermoelectric device 78 (e.g., a bottom side). In some examples, a thermal interface material (e.g., a thermal paste, a thermal pad, a thermal tape, and the like) may be disposed between the top side of the waste heat sink 84 and the bottom side of the thermoelectric device 78. The waste heat sink 84 may be configured to conduct thermal energy away from the thermoelectric device 78. For example, when the thermoelectric device 78 is configured to cool its top side in communication with the contact heat sink 80, the waste heat sink 84 may function to remove heat from the opposite side of the thermoelectric device 78. In some examples, the set of fans 86 (the fan 86) may be included in the thermoelectric system 76 in order to increase the heat transfer via the waste heat sink 84. For example, the waste heat sink 84 may include a plurality of raised fins to maximize surface area of the waste heat sink 84 and the fan 86 may assist in heat transfer by blowing air over the raised fins of the waste heat sink 84. The fan 86 may be controllable by the management device 88 in order to finely tune the operation of the thermoelectric system 76.

The contact heat sink 80 and the waste heat sink 84 may be formed from any suitable material conductive materials such as aluminum, steel, copper, copper-tungsten, conductive ceramics , and the like. The contact heat sink 80 and the waste heat sink 84 may be formed into any suitable shape such as flat plates, flat plates with raised fins, and the like.

The insulating spacer 82 may be formed from any suitable material having insulating properties (e.g., foam, wood, fiberglass, and the like). The insulating spacer 82 may include one or more openings 100 to retain the thermoelectric devices 78. In this manner, the insulating spacer 82 may retain the thermoelectric devices 78 and separate them from each other. In some examples, the insulating spacer 82 may be sandwiched between the contact heat sink 80 and the armrest support structure 90, with the thermoelectric devices 78 disposed in the openings 100.

Turning again to the thermoelectric device 78, the thermoelectric device 78 may have any suitable shape and may have rigid and/or flexible characteristics. For example, the thermoelectric device 78 may be a rigid structure having a cubic shape (e.g., 1/4" x 1/4" x 1/4"), a rectangular shape (e.g., 1/2" x 1/4" x 1/4"), or any other suitable shape having any other suitable dimensions. In some examples, multiple ones of the thermoelectric devices 78 may be combined to achieve even greater thermal energy transfer. These may be included in an array with multiple rows and multiple columns, with varying orientations between the thermoelectric devices 78 included in the rows and columns.

In other examples, the thermoelectric device 78 may be a flexible structure having a relative thin profile (e.g., 20 thousandths of an inch to 30 thousands of an inch), and may also be thinner or thicker. In some examples, such a flexible structure may enable placement of the thermoelectric device 78 within and/or below certain surfaces where there space is already limited. For example, such flexible thermoelectric devices may be included in furniture that surrounds a seat such as seat shells, tray tables, back plates, and the like. In some examples, such flexible thermoelectric devices may be formed using a printing technique including a plurality of layers. In this manner, multiple flexible thermoelectric devices may be disposed within a printed sheet of thermoelectric devices. Whether flexible or otherwise, the thermoelectric devices 78 may be connected with other thermoelectric devices to operate about in unison, and may also be independently controllable. For example, a first voltage may be applied to the thermoelectric device 78a and a second, different voltage may be applied to the thermoelectric device 78b. This may enable a finer granularity of control over the thermoelectric system 76. In some examples, the thermoelectric devices 78 may include multiple smaller thermoelectric devices that are thermally in parallel and electrically in series.

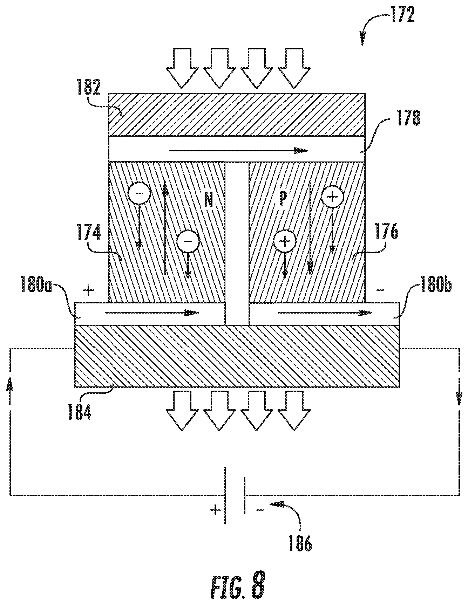

The thermoelectric device 78 may include a set of conducting elements separated by a junction that may include a combination of materials having different conductive properties (e.g., P-doped and N-doped semiconductors) as generally described with reference to Figure 8.

The management device 88 may include a power supply 102, a control module 104, one or more sensors 106, and a user interface 108. As generally described herein, the management device 88 may be any suitable device configured to manage the operation of the thermoelectric system 76. In some examples, the management device 88 may be configured to also manage other thermoelectric systems within the seat assembly 60. In other examples, the other thermoelectric systems may include their own respective versions of the management device 88.

The power supply 102 may be configured to provide power to the thermoelectric system 76 and to the management device 88. Power may be supplied to the power supply 102 via an onboard power generation system of an aircraft or other power sources.

The management device 88 may include any suitable combination of hardware and/or software components configured to perform management functions described herein. For example, the control module 104 may include control logic embodied in a control chip and/or written in computer-executable instructions stored in memory (e.g., computer-readable media). The computer-executable instructions may be accessible by a processor of the management device 88 during execution.

The sensors 106 may be any suitable sensor configured to sense information relating to managing the thermoelectric system 76. For example, the sensors 106 can include one or more temperature sensors such as thermocouples disposed within the thermoelectric system 76. One or more thermocouples may be disposed adjacent to a top surface of the arm cushion 94, adjacent the contact heat sink 80, adjacent the waste heat sink 84, outside the seat assembly 60 to detect ambient air temperature, adjacent the passenger to detect certain temperature changes of different parts of the passenger, and the like. These thermocouples may sense temperature changes and provide sensor information to the management device 88. The management device 88 may adjust its operation based on the sensor information.

The control module 104 may be configured to control the operation of the thermoelectric system 76 using any suitable close-loop or open-loop control algorithm. For example, the control module 104 may receive the sensor information described above and, in response, adjust the voltage being applied to the thermoelectric device 78. In some examples, a temperature table may be pre-generated that includes average passenger perceived comfort levels relating to a passenger-selected setting correlated to an input voltage, a temperature reading of some kind, and/or the like. The comfort levels may be developed through testing and the temperature table may be pre-populated. The control module 104 may use the temperature table and input information (e.g., a passenger-selected setting, sensor information indicating a surface temperature of the thermal surface, information about an input voltage, etc.) to adjust the operation of the thermoelectric system 76 to achieve the desired comfort level. This may include computing an appropriate voltage and current to be applied to the thermoelectric system 76 (e.g., the thermoelectric devices 78 and/or the fans 86).

In other examples, the thermoelectric system 76 may receive other input information that takes in to account many other variables that may impact the heat transfer of the thermoelectric system 76. These other inputs can include information about a passenger-selected setting (e.g., heat-low, heat-medium, heat-high, cool-low, cool-medium, or cool-high), an ambient temperature, computations relating to resistance values of components between the passenger and the respective thermal surface, temperature of a thermal surface, use of nearby thermoelectric systems, skin temperature of the passenger, passenger activity, and the like. The control module 104 may process these inputs to determine an appropriate output voltage and current.

The user interface 108 may enable user control of at least some aspects of the thermoelectric system 76. For example, the management device 88 may include mechanical and/or electrical input components (e.g., one or more buttons, slidable indicators, touch sensitive surfaces, pressure sensitive surfaces, and the like) to interact with the user interface 108. Such interactions may include, for example, turning the thermoelectric system 76 on and off, selecting between hot and cold settings, selecting a particular setting (e.g., low, medium, or high) of the hot and cold settings, and the like. In some examples, the settings may enable selection of a particular temperature setting (e.g., 85 degrees Fahrenheit), in addition to or in place of the particular setting. The temperature setting may be maintained as the control module 104 receives sensor information from the sensors 106 and adjusts the thermoelectric system 76. In some examples, the temperature setting may be an ambient air temperature setting, a component temperature setting, or a surface temperature setting.

In some examples, the management device 88 may be configured to store settings (e.g., in memory or otherwise), and use the stored setting to control the thermoelectric system 76. The settings may be particular to a passenger seat and/or particular to a passenger that will sit in the passenger seat associated with the management device 88. When the passenger's boarding pass is scanned (or when the passenger's smart phone is scanned) as part of boarding or otherwise and/or when the passenger initially interacts with the user interface 108 (e.g., by user input selecting a "Go to My Settings" function of the user interface 108 after boarding)), the management device 88 may cause the thermoelectric system 76 to operate in accordance with the stored settings. In this manner, the thermoelectric system 76 may "pre-heat" or "pre-cool" the passenger seat assembly 60 as indicated by the stored settings. In some examples, the passenger may select her temperature settings as part of booking a ticket or by using her smartphone or other user device to select the temperature settings prior to boarding. For example, as the passenger is waiting in a boarding line, the passenger may select her particular temperature settings, which may be relayed to the management device 88 in any suitable manner (e.g., via a network connection). Once received, the management device 88 can instruct the other systems accordingly.

When the management device 88 is configured to control multiple thermoelectric systems that include one or more thermal zones, the input components of the user interface 108 may enable user input relating to the multiple thermoelectric systems and/or the one or more thermal zones.

In some examples, the user interface 108 may be a graphical user interface presented on a display associated with the management device 88. For example, a portion of the management device 88 may be included in any suitable computing device such as a handheld device and the graphical user interface may be presented on a display of the handheld device. The graphical user interface, whether in the handheld device or otherwise, may be associated with the seat assembly 60. The graphical user interface may include one or more user interface elements to enable user management of the thermoelectric system 76. In some examples, the display may be touch sensitive and/or pressure sensitive. In some examples, the management device 88 may include one or more input devices (e.g., mouse, keyboard, keypad, etc.) for interacting with the graphical user interface.

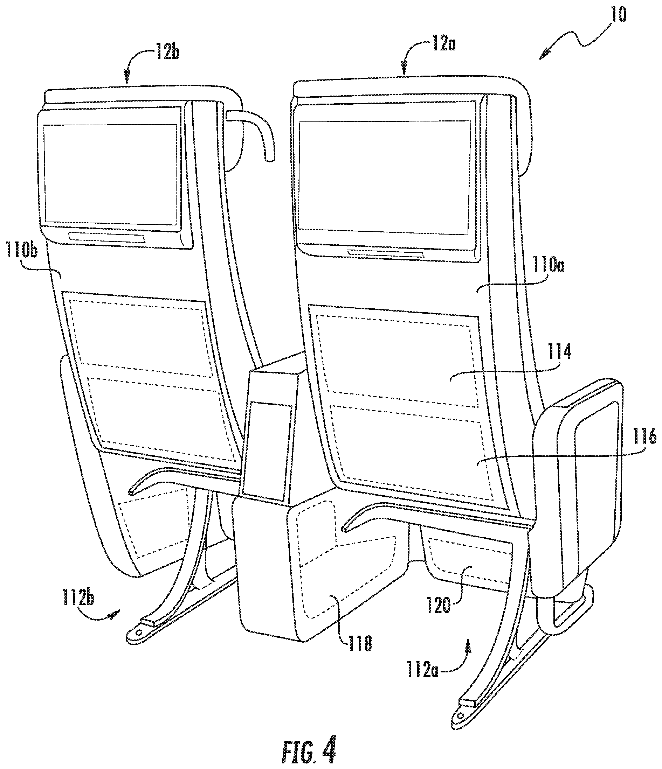

Figure 4 illustrates the seat row assembly 10 that includes the seat assemblies 12a, 12b. In particular, Figure 4 illustrates an aft surface 110 and an aft footwell 112 of the seat assemblies 12a, 12b. The aft surface 110 may be disposed on a backside of the seat assembly 12 (e.g., on the backside of the seatback). The aft surface 110 may be defined as extending from a top of the seat assembly 12 to the aft footwell 112. The aft surface 110 may include one or more thermal surfaces 114, 116. The aft footwell 112 may also include one or more thermal surfaces 118, 120. The thermal surfaces 114-120 may include one or more thermoelectric devices as described herein. In some examples, the thermal surfaces 114-120 may be configured to transfer thermal energy via radiation. In these examples, the thermoelectric systems may exclude one or more of the conductive plates.

The thermal surfaces 114-120 may be controllable by a management device associated with a different seat assembly that is located behind the seat assembly 12. Thus, even though the thermal surfaces 114-120 may be located on the seat assembly 12a, they may be operated by a passenger sitting in the different seat assembly. In some examples, the thermal surfaces 114, 116 may together define a thermal zone (e.g., a frontal leg thermal zone) that may be independently controllable as compared to the other thermal surfaces 118, 120, which may be included in other thermal zones. In some examples, the thermal surfaces 118, 120 may together define a thermal zone (e.g., a footwell thermal zone) that may be independently controllable as compared to the other thermal surfaces 114, 116, which may be included in other thermal zones. In some examples, the thermal surfaces 114-120 may be included in a single thermal zone. In some examples, the aft footwell 112 may also include other thermal surfaces such as a thermal surface on the underside of the seat bottom 50 configured to radiate heat down on the passenger's feet located in the aft footwell 112.

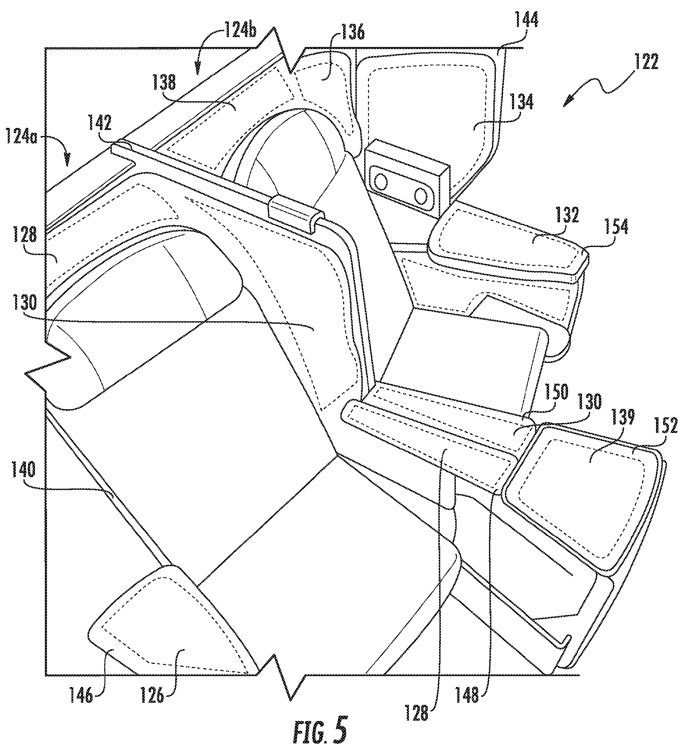

Figure 5 illustrates a seat row assembly 122 that includes a set of seat assemblies 124a, 124b that can include thermoelectric devices within a plurality of thermal surfaces 126-139, according to certain examples. The plurality of thermal surfaces 126-139 may correspond to one or more thermal zones. The plurality of thermal surfaces 126-139 may each include one or more thermoelectric devices configured as described herein. The set of seat assemblies 124 may include privacy walls 140-144. In some examples, the privacy walls 140-144 may be part of the one or more seat shells that make up the set of seat assemblies 124. The privacy walls 140-144 may have be generally vertical. In at least some of the privacy walls 140-144, may be disposed the thermal surfaces 128, 130, 134, 136, and 138. In some examples, the thermal surfaces 128, 130, 134, 136, and 138 may include thermoelectric devices configured to transfer thermal energy via radiation. This may be because a passenger is unlikely to meaningfully contact any of the thermal surfaces 128, 130, 134, 136, and 138 in order to facilitate transfer via conduction.

The set of seat assemblies 124 may also include one or more horizontal surfaces 146-154. The horizontal surfaces 146-154 may correspond to top surfaces of armrests, eating surfaces, end tables, and the like. In some examples, the horizontal surfaces 146-154 may be part of the one or more seat shells that make up the seat assemblies 124. In at least some of the components corresponding to the horizontal surfaces 146-154, may be disposed the thermal surfaces 126-132 and 139. In some examples, the thermal surfaces 126-132 and 139 may include thermoelectric devices configured to transfer thermal energy via conduction and/or radiation.

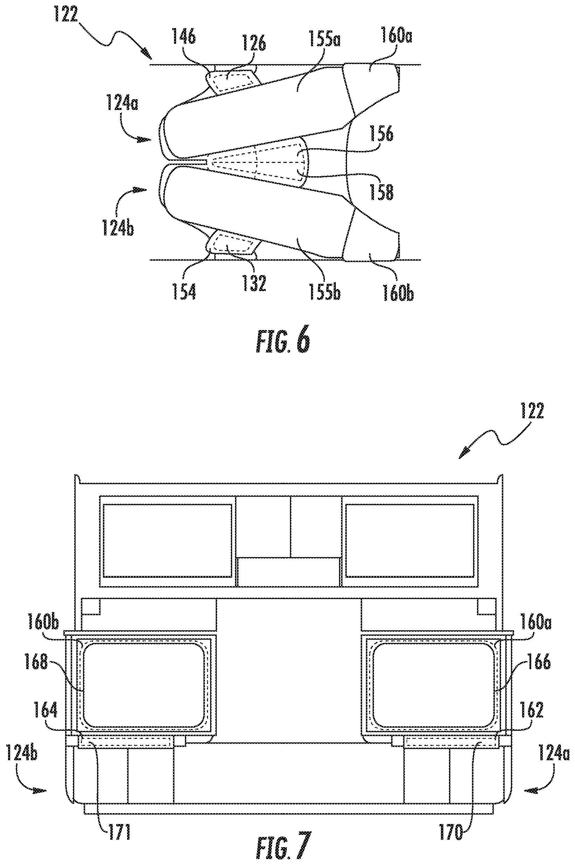

Figure 6 illustrates a top view of the seat row assembly 122 that includes the set of seat assemblies 124a, 124b that can include thermoelectric devices within thermal surfaces, according to certain examples. In the view illustrated in Figure 6, seats 155a, 155b are shown in reclined orientations. This may be considered a sleeping orientation and may result in the seats 155 being substantially horizontal. In order to add increased thermal comfort when in the sleeping orientation, the thermal surfaces 126, 132 may be provided at a similar elevation as the seats 155. In this manner, the thermal surfaces 126, 132 may provide thermal comfort when a passenger is laying down. Similarly, thermal surfaces 156, 158 may be provided at a similar level and may be associated with their respective seat assemblies 124. In some examples, the thermal surfaces 156, 158 may be two separate thermal zones that use the thermal surfaces 128, 130, and 139 described herein.

The seat assemblies 124a, 124b may also include footwell enclosures 160a, 160b. The footwell enclosure 160a may be configured to receive the feet of a passenger when the passenger is laying down on the seat 155a. The seats 155 may be configured to move towards the footwell enclosures 160. The footwell enclosures 160 may include one or more thermal surfaces 162-168 disposed therein. For example, as illustrated in Figure 7, the footwell enclosures 160 may include the thermal surfaces 162, 164 disposed in one or more cushions 170, 171 of the footwell enclosures 160. Similarly, the footwell enclosures 160 may include the thermal surfaces 166, 168 disposed within the footwell enclosures 160. For example, each footwell enclosure 160 may be formed as a cube with at least one open side. The thermal surfaces 166, 168 may extend through all interior surfaces of the cubes. In some examples, the thermal surfaces 166, 168 extend throughout two vertical opposing vertical surfaces of the cubes, throughout top and bottom horizontal surfaces, throughout a rear vertical surface, and/or throughout any suitable combination of vertical and horizontal surfaces of the footwell enclosure 160. In some examples, each of the thermal surfaces 166, 168 may more than one thermal surfaces. For example, the thermal surface 166 may include a bottom surface (e.g., on top of the cushion 170), a top surface opposite the bottom surface, a left side surface extending on the left side of the footwell enclosure 160a between the top surface and the bottom surface, a right side surface extending on the right side of the footwell enclosure 160a between the top surface and the bottom surface, an inner far surface extending between the top surface and the bottom surface.

In some examples, the thermal surfaces 164, 168 of the footwell enclosure 160b may together define a thermal zone (e.g., a first footwell enclosure zone) that may be independently controllable as compared to the other thermal surfaces 166, 162, which may be included in other thermal zones. In some examples, the thermal surfaces 166, 162 of the footwell enclosure 160a may together define a thermal zone (e.g., a second footwell enclosure zone) that may be independently controllable as compared to the other thermal surfaces 164, 168, which may be included in other thermal zones.

Figure 8 illustrates an example block diagram of a thermoelectric device 172, according to certain examples. The thermoelectric device 172 is an example of the thermoelectric device 78 described herein. As such, the thermoelectric device 172 may be configured to operate in accordance with the Peltier effect. As illustrated, the thermoelectric device 172 is configured to perform thermal cooling. It is understood, however, that reversing the polarity of the current illustrated will result in the thermoelectric device 172 performing heating.

The thermoelectric device 172 may include a N-type semiconductor 174 and a P-type semiconductor 176, each having different electron densities. The N-type semiconductor 174 and the P-type semiconductor 176 may be disposed so as to be thermally in parallel and electrically in series. Opposing ends of the N-type semiconductor 174 and the P-type semiconductor 176 may be joined by a top plate 178 and a pair of bottom plates 180a, 180b, each of which may be thermally conductive. As multiple thermoelectric devices 172 may be installed together, the pair of bottom plates 180a, 180b may extend to connect to bottoms of other N-type semiconductors and other P-type semiconductors.

The thermoelectric device 172 may also include a first surface 182 disposed above the top plate 178 and a second surface 184 disposed below the bottom plates 180a, 180b. In some examples, the first surface 182 may correspond to a top side of the thermoelectric device 78 or the contact heat sink 80. In some examples, the second surface 184 may correspond to a bottom side of the thermoelectric device 78 or the contact heat sink 80.

In any event, when a first current is applied by power source 186 to the thermoelectric device 172, the first surface 182 may be cooled and the second surface 184 may function as a heat sink. When the polarity of the current is reversed and applied by the power source 186 to the thermoelectric device 172, the second surface 184 may be cooled and the first surface 182 may function as a heat sink. In some examples, the first surface 182 and the second surface 184 may extend beyond the thermoelectric device 172. In this manner, the first surface 182 and the second surface 184 may function to sandwich other thermoelectric devices between the first surface 182 and the second surface 184. In some examples, the first surface 182 and the second surface 184 are formed from a ceramic material.

Spatially relative terms, such as "below", "above", "lower", "upper" and the like may be used above to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as "below" and/or "beneath" other elements or features would then be oriented "above" the other elements or features. The device may be otherwise oriented (e.g., rotated 90 degrees or at other orientations) and the spatially relative descriptors used herein interpreted accordingly.

Different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made within the scope of the claims below.

## Claims

1. An armrest (18) of a passenger seat (14), the armrest (18) comprising:
a support structure (90) disposed adjacent to a top surface of the armrest;
**characterised in that** the armrest (18) further comprises:
a thermoelectric system (76) attached to the support structure (90), the thermoelectric system (76) comprising:
a thermoelectric device (78) comprising a first side and a second side, the thermoelectric device (78) configured such that a first current having a first polarity applied to the thermoelectric device (78) causes a temperature of the first side to increase, and a second current having a second polarity applied to the thermoelectric device (78) causes the temperature of the first side to decrease;
a conductive plate (80) disposed above, and in thermal contact with, the first side of the thermoelectric device (78); and
a conductive heat sink (84) disposed below, and in thermal contact with, the second side of the thermoelectric device (78).

2. The armrest (18) of claim 1, wherein the thermoelectric system (76) further comprises a fan (86) disposed below the conductive heat sink (84), the fan (86) configured to move air over the conductive heat sink (84).

3. The armrest (18) of claim 2, wherein the thermoelectric system (76) further comprises a management device (88) electrically connected to the thermoelectric device (78) and the fan (86), the management device (88) configured to:
manage at least the first current and the second current that is applied to the thermoelectric device (78); and
manage operation of the fan (86).

4. The armrest (18) of claim 2 or 3, wherein the thermoelectric system (76) is attached to the support structure (90) by sandwiching the support structure (90) between the conductive plate (80), and the conductive heat sink(84) and the fan (86), with the thermoelectric device (78) disposed within a recessed portion (93) of the support structure (90).

5. The armrest (18) of claim 1, wherein the thermoelectric system (76) defines a first thermal zone (40, 42) of the passenger seat (14), the passenger seat (14) comprising a plurality of thermal zones (22-26, 28-48), and wherein the thermoelectric system (76) further comprises a management device (88) electrically connected to the thermoelectric device (78) and other thermoelectric devices (78) in other thermal zones of the plurality of thermal zones (22-26, 28-48), the management device (88) configured to manage operation of the thermoelectric device (78) in the first thermal zone independent of the other thermoelectric devices.

6. The armrest (18) of any of the preceding claims, where the thermoelectric devices (78) is one of a plurality of thermoelectric devices included in the thermoelectric system (76), individual first sides of the plurality of thermoelectric devices (78) in thermal contact with the conductive plate (80), and individual second sides of the plurality of thermoelectric devices (78) in thermal contact with the conductive heat sink (84).

7. The armrest (18) of claim 6, wherein the plurality of thermoelectric device (78) is configured such that the first current having the first polarity causes the temperature of the individual first sides to increase, and the second current having the second polarity causes the temperature of the individual first sides to decrease.

8. The armrest (18) of any of the preceding claims, wherein the conductive plate (80) is in thermal contact with the first side of the thermoelectric device (78) via a first portion of a thermal interface material, and wherein the conductive heat sink is in thermal contact with the second side of the thermoelectric device via a second portion of the thermal interface material.

9. The armrest (18) of claim 8, wherein the thermal interface material comprises a thermal paste or a thermal tape.

10. A passenger seat assembly (12), comprising:
a seat shell (20, 62) configured to receive a passenger seat (14), the seat shell (20, 62) comprising a plurality of surfaces (36, 38, 68, 70, 72, 74, 162, 164, 166, 168); and
a first thermoelectric device (78) disposed below or within at least one surface of the plurality of surfaces (36, 38, 68, 70, 72, 74, 162, 164, 166, 168) to define a thermal zone, the first thermoelectric device (78) oriented in accordance with a first orientation and comprising a first side and a second side, the first side adjacent to the at least one shell surface (36, 38, 68, 70, 72, 74, 162, 164, 166, 168), the first thermoelectric device (78) configured such that application of a first current having a first polarity causes a temperature of the thermal zone to increase, and application of a second current having a second polarity causes the temperature of the thermal zone to decrease;
**characterised in that** the passenger seat assembly (12) further comprises a second thermoelectric device (78) disposed below or within the at least one surface of the plurality of surfaces (36, 38, 68, 70, 72, 74, 162, 164, 166, 168) to define the thermal zone, the second thermoelectric device (78) orientated according to a second, opposite orientation and comprising a first side and a second side, the second side of the second thermoelectric device (78) adjacent to the at least one shell surface (36, 38, 68, 70, 72, 74, 162, 164, 166, 168), the second thermoelectric device configured such that application of the first current having the first polarity causes the temperature of the thermal zone to decrease, and application of the second current having the second polarity causes the temperature of the thermal zone to increase.

11. The passenger seat assembly of claim 10, further comprising a footwell enclosure (160, 160a, 160b) comprising the at least one surface (162, 164, 166, 168), and wherein the passenger seat is configured to recline towards the footwell enclosure (160, 160a, 160b) to have a substantially flat orientation.

12. The passenger seat assembly of claim 10, wherein the plurality of surfaces (36, 38, 68, 70, 72, 74, 162, 164, 166, 168) of the seat shell (20, 62) comprises two or more of a first horizontal armrest surface, a second horizontal armrest surface, a first vertical armrest surface, a second vertical armrest surface, a first vertical privacy surface, a second vertical privacy surface, or a forward head surface.

13. A passenger seat (14), comprising:
a plurality of thermal zones (22-26, 28-48, 114-120) corresponding to a plurality of components of the passenger seat (14), each thermal zone of the plurality of thermal zones (22-26, 28-48, 114-120) comprising a thermoelectric device (78) disposed therein, each thermoelectric device (78) comprising a first side and a second side, the first side oriented towards an exterior surface of the passenger seat (14); and
a management device (88) configured to manage each of the thermoelectric devices (78) such that application of a first current having a first polarity causes a temperature of the respective thermal zone to increase, and application of a second current having a second polarity causes the temperature of the respective thermal zone to decrease;
**characterised in that**:-
the thermoelectric devices (78) are oriented in alternate orientations so as to have dedicated hot surfaces and dedicated cold surfaces whereby, in use, the management device (88) is configured to apply a current with the same polarity to those thermoelectric devices (78) that are configured to heat the respective thermal zone and to those thermoelectric devices (78) that are configured to cool the respective thermal zone.

14. The passenger seat (14) of claim 13, wherein the plurality of thermal zones (22-26, 28-48, 114-120) comprises two or more of a seatback zone (114, 116), a seat bottom zone (32), a lower leg zone (34), a head zone (26), or an armrest zone (40).

15. The passenger seat (14) of claim 13 or 14, wherein the plurality of thermal zones (22-26, 28-48, 114-120) comprises a plurality of forward zones disposed on a forward part of the passenger seat (14), and wherein the passenger seat (14) further comprises an aft zone disposed on an aft part of the passenger seat (14), the aft zone comprising one or more other thermal zones including other thermoelectric devices (78) managed by a separate management device (88) associated with a separate passenger seat disposed behind the passenger seat (14).

## Patentansprüche

1. Armlehne (18) eines Fahrgastsitzes (14), wobei die Armlehne (18) Folgendes umfasst:
eine Trägerstruktur (90), die an eine Oberseite der Armlehne angrenzend angeordnet ist;
**dadurch gekennzeichnet, dass** die Armlehne (18) weiter Folgendes umfasst:
ein thermoelektrisches System (76), das an der Trägerstruktur (90) angebracht ist, wobei das thermoelektrische System (76) Folgendes umfasst:
eine thermoelektrische Vorrichtung (78), die eine erste und eine zweite Seite umfasst, wobei die thermoelektrische Vorrichtung (78) derart konfiguriert ist, dass ein erster Strom, der eine erste Polarität aufweist, der an die thermoelektrische Vorrichtung (78) angelegt wird, ein Ansteigen der Temperatur der ersten Seite bewirkt, und ein zweiter Strom, der eine zweite Polarität aufweist, der an die thermoelektrische Vorrichtung (78) angelegt wird, ein Verringern der Temperatur der ersten Seite bewirkt;
eine leitfähige Platte (80), die oberhalb der ersten Seite der thermoelektrischen Vorrichtung (78) angeordnet ist und mit dieser in thermischem Kontakt steht; und
einen leitfähigen Kühlkörper (84), der unterhalb der zweiten Seite der thermoelektrischen Vorrichtung (78) angeordnet ist und mit dieser in thermischem Kontakt steht.

2. Armlehne (18) nach Anspruch 1, wobei das thermoelektrische System (76) weiter einen Lüfter (86) umfasst, der unterhalb des leitfähigen Kühlkörpers (84) angeordnet ist, wobei der Lüfter (86) dazu konfiguriert ist, Luft über den leitfähigen Kühlkörper (84) zu bewegen.

3. Armlehne (18) nach Anspruch 2, wobei das thermoelektrische System (76) weiter eine Managementvorrichtung (88) umfasst, die elektrisch mit der thermoelektrischen Vorrichtung (78) und dem Lüfter (86) verbunden ist, wobei die Managementvorrichtung (88) konfiguriert ist zum:
Managen mindestens des ersten und des zweiten Stroms, die an die thermoelektrische Vorrichtung (78) angelegt werden; und
Managen des Betriebs des Lüfters (86).

4. Armlehne (18) nach Anspruch 2 oder 3, wobei das thermoelektrische System (76) an der Trägerstruktur (90) angebracht ist, indem die Trägerstruktur (90) zwischen der leitfähigen Platte (80), dem leitfähigen Kühlkörper (84) und dem Lüfter (86) eingeklemmt in's Sandwich genommen ist, wobei die thermoelektrische Vorrichtung (78) in einem vertieften Abschnitt (93) der Trägerstruktur (90) angeordnet ist.

5. Armlehne (18) nach Anspruch 1, wobei das thermoelektrische System (76) eine erste thermische Zone (40, 42) des Fahrgastsitzes (14) definiert, der Fahrgastsitz (14) eine Vielzahl thermischer Zonen (22-26, 28-48) umfasst, und wobei das thermoelektrische System (76) weiter eine Managemenvorrichtung (88) umfasst, die elektrisch mit der thermoelektrischen Vorrichtung (78) und anderen thermoelektrischen Vorrichtungen (78) in anderen thermischen Zonen der Vielzahl thermischer Zonen (22-26, 28-48) verbunden ist, wobei die Managementvorrichtung (88) dazu konfiguriert ist, den Betrieb der thermoelektrischen Vorrichtung (78) in der ersten thermischen Zone unabhängig von den anderen thermoelektrischen Vorrichtungen zu managen.

6. Armlehne (18) nach einem der vorstehenden Ansprüche, wobei die thermoelektrischen Vorrichtungen (78) eines von einer Vielzahl thermoelektrischer Elemente sind, die in dem thermoelektrischen System (76) beinhaltet sind, wobei einzelne erste Seiten der Vielzahl thermoelektrischer Vorrichtungen (78) in thermischem Kontakt mit der leitfähigen Platte (80) stehen und einzelne zweite Seiten der Vielzahl thermoelektrischer Vorrichtungen (78) in thermischem Kontakt mit dem leitfähigen Kühlkörper (84) stehen.

7. Armlehne (18) nach Anspruch 6, wobei die Vielzahl thermoelektrischer Vorrichtungen (78) derart konfiguriert ist, dass der erste Strom, der die erste Polarität aufweist, das Ansteigen Temperatur der einzelnen ersten Seiten bewirkt, und der zweite Strom, der die zweite Polarität aufweist, das Verringern der Temperatur der einzelnen ersten Seiten bewirkt.

8. Armlehne (18) nach einem der vorstehenden Ansprüche, wobei die leitfähige Platte (80) über einen ersten Abschnitt eines thermischen Schnittstellenmaterial mit der ersten Seite der thermoelektrischen Vorrichtung (78) in thermischem Kontakt steht, und wobei der leitfähige Kühlkörper über einen zweiten Abschnitt des thermischen Schnittstellenmaterials mit der zweiten Seite der thermoelektrischen Vorrichtung in Kontakt steht.

9. Armlehne (18) nach Anspruch 8, wobei das thermische Schnittstellenmaterial eine Wärmeleitpaste oder ein Wärmeleitband umfasst.

10. Fahrgastsitzbaugruppe (12), die Folgendes umfasst:
eine Sitzschale (20, 62), die dazu konfiguriert ist, einen Fahrgastsitz (14) aufzunehmen, wobei die Sitzschale (20, 62) eine Vielzahl von Oberflächen (36, 38, 68, 70, 72, 74, 162, 164, 166, 168) umfasst; und
eine erste thermoelektrische Vorrichtung (78), die unter oder in mindestens einer Oberfläche der Vielzahl von Oberflächen (36, 38, 68, 70, 72, 74, 162, 164, 166, 168) angeordnet ist, um eine thermische Zone zu definieren, wobei die erste thermoelektrische Vorrichtung (78) gemäß einer ersten Ausrichtung ausgerichtet ist und eine erste und eine zweite Seite umfasst, wobei die erste Seite an die mindestens eine Schalenfläche (36, 38, 68, 70, 72, 74, 162, 164, 166, 168) angrenzt, wobei die erste thermoelektrische Vorrichtung (78) dazu konfiguriert ist, dass das Anlegen eines ersten Stroms, der eine erste Polarität aufweist, ein Ansteigen der Temperatur der thermischen Zone bewirkt, und das Anlegen eines zweiten Stroms, der eine zweite Polarität aufweist, ein Verringern der Temperatur der thermischen Zone bewirkt;
**dadurch gekennzeichnet, dass** die Fahrgastsitzbaugruppe (12) weiter eine zweite thermoelektrische Vorrichtung (78) umfasst, die unter oder in mindestens einer Oberfläche der Vielzahl von Oberflächen (36, 38, 68, 70, 72, 74, 162, 164, 166, 168) angeordnet ist, um die thermische Zone zu definieren, die zweite thermoelektrische Vorrichtung (78) gemäß einer zweiten, entgegengesetzten Ausrichtung ausgerichtet ist und eine erste und eine zweite Seite umfasst, wobei die zweite Seite der zweiten thermoelektrischen Vorrichtung (78) an die mindestens eine Schalenoberfläche (36, 38, 68, 70, 72, 74, 162, 164, 166, 168) angrenzt, die zweite thermoelektrische Vorrichtung derart konfiguriert ist, dass das Anlegen des ersten Stroms, der eine erste Polarität aufweist, das Verringern der Temperatur der thermischen Zone bewirkt, und das Anlegen eines zweiten Stroms, der die zweite Polarität aufweist, das Ansteigen der Temperatur der thermischen Zone bewirkt.

11. Fahrgastsitzbaugruppe nach Anspruch 10, die weiter eine Fußraumumschließung (160, 160a, 160b) umfasst, die mindesten eine Oberfläche (162, 164, 166, 168) umfasst, und wobei der Fahrgastsitz dazu konfiguriert ist, sich in Richtung der Fußraumumschließung (160, 160a, 160b) zu neigen und eine im Wesentlichen flache Ausrichtung aufzuweisen.

12. Fahrgastsitzbaugruppe nach Anspruch 10, wobei die Vielzahl von Oberflächen (36, 38, 68, 70, 72, 74, 162, 164, 166, 168) der Sitzschale (20, 62) zwei oder mehr einer ersten horizontalen Armlehnenfläche, einer zweiten horizontalen Armlehnenfläche, einer ersten vertikalen Armlehnenfläche, einer zweiten vertikalen Armlehnenfläche, einer ersten vertikalen Sichtschutzfläche, einer zweiten vertikalen Sichtschutzfläche oder einer nach vorn gerichteten Kopffläche umfasst.

13. Fahrgastsitz (14), der Folgendes umfasst:
eine Vielzahl thermischer Zonen (22-26, 28-48, 114-120), die einer Vielzahl von Komponenten des Fahrgastsitzes (14) entspricht, wobei jede thermische Zone der Vielzahl thermischer Zonen (22-26, 28-48, 114-120) eine darin angeordnete thermoelektrische Vorrichtung (78) umfasst, wobei jede thermoelektrische Vorrichtung (78) eine erste und eine zweite Seite aufweist, wobei die erste Seite in Richtung einer Außenfläche des Fahrgastsitzes (14) ausgerichtet ist; und
eine Managementvorrichtung (88), die dazu konfiguriert ist, jede der thermoelektrischen Vorrichtungen (78) derart zu steuern, dass ein Anlegen eines ersten Stroms, der eine erste Polarität aufweist, ein Ansteigen der Temperatur der jeweiligen thermischen Zone bewirkt, und ein Anlegen eines zweiten Stroms, der eine zweite Polarität aufweist, ein Verringern der Temperatur der jeweiligen thermischen Zone bewirkt;
**dadurch gekennzeichnet, dass**:
die thermoelektrischen Vorrichtungen (78) in abwechselnden Ausrichtungen derart ausgerichtet sind, dass sie dedizierte heiße Oberflächen und dedizierte kalte Oberfläche aufweisen, wodurch bei Verwendung die Managementvorrichtung (88) dazu konfiguriert ist, einen Strom mit der gleichen Polarität an die thermoelektrischen Vorrichtungen (78) anzulegen, die dazu konfiguriert sind, die jeweilige thermische Zone zu erwärmen, und an die thermoelektrischen Vorrichtungen (78), die dazu konfiguriert sind, die jeweilige thermische Zone zu kühlen.

14. Fahrgastsitz (14) nach Anspruch 13, wobei die Vielzahl thermischer Zonen (22-26, 28-48, 114-120) zwei oder mehr einer Rückenlehnenzone (114, 116), einer Sitzflächenzone (32), einer Unterschenkelzone (34), einer Kopfzone (26) oder einer Armlehnenzone (40) umfasst.

15. Fahrgastsitz (14) nach Anspruch 13 oder 14, wobei die Vielzahl thermischer Zonen (22-26, 28-48, 114-120) eine Vielzahl vorderer Zonen umfasst, die auf einem vorderen Teil des Fahrgastsitzes (14) angeordnet sind, und wobei der Fahrgastsitz (14) weiter eine hintere Zone umfasst, die auf einem hinteren Teil des Fahrgastsitzes (14) angeordnet ist, wobei die hintere Zone eine oder mehrere andere thermische Zonen umfasst, einschließlich anderer thermoelektrischer Vorrichtungen (78), die von einer separaten Managementvorrichtung (88) gesteuert werden, die einem separaten Fahrgastsitz zugeordnet ist, der hinter dem Fahrgastsitz (14) angeordnet ist.

## Revendications

1. Accoudoir (18) d'un siège passager (14), l'accoudoir (18) comprenant :
une structure de support (90) disposée à proximité d'une surface supérieure de l'accoudoir ;
**caractérisé en ce que** l'accoudoir (18) comprend en outre :
un système thermoélectrique (76) fixé à la structure de support (90), le système thermoélectrique (76) comprenant :
un dispositif thermoélectrique (78) comportant une première face et une deuxième face, le dispositif thermoélectrique (78) étant configuré de telle sorte qu'un premier courant ayant une première polarité appliquée au dispositif thermoélectrique (78) provoque une augmentation de la température de la première face, et qu'un deuxième courant ayant une deuxième polarité appliquée au dispositif thermoélectrique (78) provoque une diminution de la température de la première face ;
une plaque conductrice (80) disposée au-dessus de la première face du dispositif thermoélectrique (78) et en contact thermique avec celle-ci ; et
un dissipateur thermique conducteur (84) disposé au-dessous de la deuxième face du dispositif thermoélectrique (78) et en contact thermique avec celle-ci.

2. Accoudoir (18) selon la revendication 1, dans lequel le système thermoélectrique (76) comprend en outre un ventilateur (86) disposé sous le dissipateur thermique conducteur (84), le ventilateur (86) étant configuré pour faire circuler de l'air sur le dissipateur thermique conducteur (84).

3. Accoudoir (18) selon la revendication 2, dans lequel le système thermoélectrique (76) comprend en outre un dispositif de gestion (88) connecté électriquement au dispositif thermoélectrique (78) et au ventilateur (86), le dispositif de gestion (88) étant configuré pour :
gérer au moins le premier courant et le deuxième courant qui sont appliqués au dispositif thermoélectrique (78) ; et
gérer le fonctionnement du ventilateur (86).

4. Accoudoir (18) selon la revendication 2 ou 3, dans lequel le système thermoélectrique (76) est fixé à la structure de support (90) en prenant en sandwich la structure de support (90) entre la plaque conductrice (80), et le dissipateur thermique conducteur (84) et le ventilateur (86), le dispositif thermoélectrique (78) étant disposé à l'intérieur d'une partie en retrait (93) de la structure de support (90).

5. Accoudoir (18) selon la revendication 1, dans lequel le système thermoélectrique (76) définit une première zone thermique (40, 42) du siège passager (14), le siège passager (14) comprenant une pluralité de zones thermiques (22 à 26, 28 à 48), et dans lequel le système thermoélectrique (76) comprend en outre un dispositif de gestion (88) relié électriquement au dispositif thermoélectrique (78) et à d'autres dispositifs thermoélectriques (78) situés dans d'autres zones thermiques de la pluralité de zones thermiques (22 à 26, 28 à 48), le dispositif de gestion (88) étant configuré pour gérer le fonctionnement du dispositif thermoélectrique (78) dans la première zone thermique indépendamment des autres dispositifs thermoélectriques.

6. Accoudoir (18) selon l'une quelconque des revendications précédentes, dans lequel le dispositif thermoélectrique (78) est l'un d'une pluralité de dispositifs thermoélectriques inclus dans le système thermoélectrique (76), les premières faces individuelles de la pluralité de dispositifs thermoélectriques (78) étant en contact thermique avec la plaque conductrice (80), et les deuxièmes faces individuelles de la pluralité de dispositifs thermoélectriques (78) étant en contact thermique avec le dissipateur thermique conducteur (84).

7. Accoudoir (18) selon la revendication 6, dans lequel la pluralité de dispositifs thermoélectriques (78) est configurée de telle sorte que le premier courant ayant la première polarité provoque une augmentation de la température des premières faces individuelles, et que le deuxième courant ayant la deuxième polarité provoque une diminution de la température des premières faces individuelles.

8. Accoudoir (18) selon l'une quelconque des revendications précédentes, dans lequel la plaque conductrice (80) est en contact thermique avec la première face du dispositif thermoélectrique (78) par l'intermédiaire d'une première partie d'un matériau d'interface thermique, et dans lequel le dissipateur thermique conducteur est en contact thermique avec la deuxième face du dispositif thermoélectrique par l'intermédiaire d'une deuxième partie du matériau d'interface thermique.

9. Accoudoir (18) selon la revendication 8, dans lequel le matériau d'interface thermique comprend une pâte thermique ou un ruban thermique.

10. Ensemble de siège passager (12), comprenant :
une coque de siège (20, 62) configurée pour recevoir un siège passager (14), la coque de siège (20, 62) comprenant une pluralité de surfaces (36, 38, 68, 70, 72, 74, 162, 164, 166, 168) ; et
un premier dispositif thermoélectrique (78) disposé sous ou à l'intérieur d'au moins une surface parmi la pluralité de surfaces (36, 38, 68, 70, 72, 74, 162, 164, 166, 168) afin de définir une zone thermique, le premier dispositif thermoélectrique (78) étant orienté selon une première orientation et comprenant une première face et une deuxième face, la première face étant adjacente à ladite au moins une surface de coque (36, 38, 68, 70, 72, 74, 162, 164, 166, 168), le premier dispositif thermoélectrique (78) étant configuré de telle sorte que l'application d'un premier courant ayant une première polarité provoque une augmentation de la température de la zone thermique, et que l'application d'un deuxième courant ayant une deuxième polarité provoque une diminution de la température de la zone thermique ;
**caractérisé en ce que** l'ensemble de siège passager (12) comprend en outre un deuxième dispositif thermoélectrique (78) disposé sous ou à l'intérieur de ladite au moins une surface parmi la pluralité de surfaces (36, 38, 68, 70, 72, 74, 162, 164, 166, 168) afin de définir la zone thermique, le deuxième dispositif thermoélectrique (78) étant orienté selon une deuxième orientation opposée et comprenant une première face et une deuxième face, la deuxième face du deuxième dispositif thermoélectrique (78) étant adjacente à ladite au moins une surface de coque (36, 38, 68, 70, 72, 74, 162, 164, 166, 168), le deuxième dispositif thermoélectrique étant configuré de telle sorte que l'application du premier courant ayant la première polarité provoque une diminution de la température de la zone thermique, et que l'application du deuxième courant ayant la deuxième polarité provoque une augmentation de la température de la zone thermique.

11. Ensemble de siège passager selon la revendication 10, comprenant en outre une enceinte de plancher (160, 160a, 160b) comprenant ladite au moins une surface (162, 164, 166, 168), et dans lequel le siège passager est configuré pour s'incliner vers l'enceinte de plancher (160, 160a, 160b) afin d'adopter une orientation sensiblement à plat.

12. Ensemble de siège passager selon la revendication 10, dans lequel la pluralité de surfaces (36, 38, 68, 70, 72, 74, 162, 164, 166, 168) de la coque de siège (20, 62) comprend au moins deux parmi : une première surface d'accoudoir horizontale, une deuxième surface d'accoudoir horizontale, une première surface d'accoudoir verticale, une deuxième surface d'accoudoir verticale, une première surface d'intimité verticale, une deuxième surface d'intimité verticale ou une surface d'appui-tête avant.

13. Siège passager (14), comprenant :
une pluralité de zones thermiques (22 à 26, 28 à 48, 114 à 120) correspondant à une pluralité de composants du siège passager (14), chaque zone thermique de la pluralité de zones thermiques (22 à 26, 28 à 48, 114 à 120) comprenant un dispositif thermoélectrique (78) disposé en son sein, chaque dispositif thermoélectrique (78) comprenant une première face et une deuxième face, la première face étant orientée vers une surface extérieure du siège passager (14) ; et
un dispositif de gestion (88) configuré pour gérer chacun des dispositifs thermoélectriques (78) de telle sorte que l'application d'un premier courant ayant une première polarité provoque une augmentation de la température de la zone thermique respective, et que l'application d'un deuxième courant ayant une deuxième polarité provoque une diminution de la température de la zone thermique respective ;
**caractérisé en ce que** :
les dispositifs thermoélectriques (78) sont orientés en alternance de manière à présenter des surfaces chaudes dédiées et des surfaces froides dédiées, de sorte que, en fonctionnement, le dispositif de gestion (88) est configuré pour appliquer un courant de même polarité aux dispositifs thermoélectriques (78) qui sont configurés pour chauffer la zone thermique respective et aux dispositifs thermoélectriques (78) qui sont configurés pour refroidir la zone thermique respective.

14. Siège passager (14) selon la revendication 13, dans lequel la pluralité de zones thermiques (22 à 26, 28 à 48, 114 à 120) comprend au moins deux parmi une zone de dossier (114, 116), une zone d'assise (32), une zone de jambes (34), une zone de tête (26) ou une zone d'accoudoir (40).

15. Siège passager (14) selon la revendication 13 ou 14, dans lequel la pluralité de zones thermiques (22 à 26, 28 à 48, 114 à 120) comprend une pluralité de zones avant disposées sur une partie avant du siège passager (14), et dans lequel le siège passager (14) comprend en outre une zone arrière disposée sur une partie arrière du siège passager (14), la zone arrière comprenant une ou plusieurs autres zones thermiques comprenant d'autres dispositifs thermoélectriques (78) gérés par un dispositif de gestion distinct (88) associé à un siège passager distinct disposé derrière le siège passager (14).
